# EUROPÄISCHE PATENTSCHRIFT

(11) **EP 0 932 521 B1**
(45) Veröffentlichungstag und Bekanntmachung des Hinweises auf die Patenterteilung: **05.04.2000**
(21) Anmeldenummer: 97911194.5
(22) Anmeldetag: 08.10.1997
(51) Int. Cl.: B60N 2/48

(54) **Kopfstütze für einen Fahrzeugsitz**
Head rest for a vehicle seat
Appui-tête destiné à un siège de véhicule

(30) Priorität: 17.10.1996 DE 19642894
(43) Veröffentlichungstag der Anmeldung: 04.08.1999
(73) Patentinhaber: INA Wälzlager Schaeffler oHG, 91072 Herzogenaurach (DE)
(72) Erfinder: KLINDWORTH, Jan, D-80538 München (DE)
(86) Internationale Anmeldenummer: EP9705526
(87) Internationale Veröffentlichungsnummer: WO9817496

(56) Entgegenhaltungen:
- DE-A- 3 318 866
- FR-A- 2 671 587
- US-A- 4 411 470
- US-A- 4 577 904
- PATENT ABSTRACTS OF JAPAN vol. 096, no. 004, 30.April 1996 & JP 07 313288 A (TAKASHIMAYA NIPPATSU KOGYO KK), 5.Dezember 1995,

## Beschreibung

Die Erfindung betrifft eine Kopfstütze für einen Fahrzeugsitz, die an Tragstangen fixiert ist, wobei zumindest eine der Tragstangen als Klemmelement ausgebildet ist und mit einem Sperrelement zusammenwirkt, welches in einer ortsfest in einer Rückenlehne des Fahrzeugsitzes angeordneten Aufnahme für die Tragstange vorgesehen ist.

### Stand der Technik

Eine gattungsbildende Verriegelungseinrichtung für höheneinstellbare Kopfstützen ist aus der DE 33 01 073 C2 (der US-A-4 577 904 entsprechend) bekannt. Dabei sind die innerhalb einer Führungshülse verschiebbar geführten Tragschienen zumindest in ihrem Endbereich mit einer Rastausnehmung versehen, in die eine verformbare Schenkelfeder eingreift. Auf diese Weise soll verhindert werden, daß die Kopfstütze mit samt ihren Tragstangen vollständig aus der Rückenlehne des Fahrzeugsitzes herausgezogen werden kann.

Weiterhin sind Vorrichtungen zur Höhenverstellung der Kopfstützen von Fahrzeugsitzen bekannt, bei denen die Tragstangen über gleichmäßig verteilt angeordnete Rastausnehmungen verfügen, in die eine federnde Raste eingreift. Eine Verstellung der Kopfstütze erfordert demzufolge eine Kraft, die die Verrastung der Kopfstütze aufhebt. Somit kann vom jeweiligen Insassen die entsprechende Position der Kopfstütze auf die individuelle Körpergröße einjustiert werden. Leider weisen derartige Verstelleinrichtungen für den Fall eines Unfalls keine ausreichende Sicherheit auf. Während eines Verkehrsunfalls mit einem Aufprall auf das Heck das Fahrzeuges wird der Kopf des Insassen nach hinten in Richtung auf die Kopfstütze geschleudert. Dadurch besteht insbesondere bei einer zu niedrig eingestellten Kopfstütze die Gefahr, daß sich die im Fahrzeugsitz verankerte Kopfstütze einschiebt, wodurch es zu einer Überdehnung der Halswirbelsäule, also zu einem Schleudertrauma kommen kann. Während modernere Kraftfahrzeuge insbesondere die Bewegung des Kopfes der Fahrzeuginsassen nach vorne durch Airbags aufhalten und abfedern, ist bislang für die Bewegung des Kopfes eines Fahrzeuginsassen nach hinten noch keine ebenfalls geeignete Sicherheitseinrichtung entwickelt worden.

Die weitere im internationalen vorläufigen Prüfungsbescheid zitierte Druckschrift US 4,411,470 A offenbart eine Sperreinrichtung, bei der die Kopfstütze mit reibschlüssigen Mitteln in ihrer Position gehalten werden soll. Diese reibschlüssigen Mittel bestehen u. a., wie die Figuren 9, 10a und 10b zeigen, aus einer die jeweilige Tragstange radial umgebenden Feder, die während der Sperrung durch eine schräge Fläche radial nach innen vorgespannt wird. Dadurch soll die entsprechende Tragstange reibschlüssig in der jeweiligen Position gehalten werden. Eine derartige Kopfstützenverriegelung Könnte zum einen keinen ausreichenden Schutz gegen das zuvor erläuterte Einschieben der Tragstangen während eines Unfalls bieten, und zum anderen Könnte diese Verriegelung auch unkomfortabel sein, denn je nach Stellung der Kopfstütze steht nicht genügend Raum zur Verfügung, um das zur Klemmung verwendete Element mit den Handen zu verdrehen.

### Darstellung der Erfindung

Der Erfindung liegt die Aufgabe zugrunde, die vorgenannten Probleme zu beseitigen und folglich eine individuell einstellbare Kopfstütze zu schaffen, deren Einschieben in die Rückenlehne des Fahrzeugsitzes während eines Unfalls mit Sicherheit vermieden wird.

Diese Aufgabe wird durch die kennzeichnenden Merkmale des Anspruchs 1 gelöst. Danach soll das Sperrelement als in linearer Bewegungsrichtung wirkender Freilauf ausgebildet sein, der in einer Sperrstellung einen Einschub der Tragstange in die Aufnahme verhindert und über ein Betätigungselement entriegelbar ist. Folglich läßt sich die Kopfstütze in einer entsperrten Stellung des Sperrelements problemlos individuell an die Größe des Fahrers oder Beifahrers einstellen. In der gesperrten Stellung des Sperrelements ist die Kopfstütze aber derart verriegelt, daß sie auch während eines Unfalls nicht in Richtung der Rückenlehne verstellt werden kann.

Erfindungsgemäß ist weiterhin vorgesehen, durch eine gezielte Ausbildung eines Klemmkörperträgers sowie eines Schaltringes mit zwischen diesen angeordneten federbelasteten Klemmkörpern eine Verschiebesperre für das Klemmelement zu erzeugen, das durch den Schaltring sowie den Klemmkörperträger hindurchtritt. Durch eine gezielte Verdrehung des Schaltringes gelangen die federbelasteten Klemmkörper in einen klemmenden Kontakt zu dem Klemmelement und verhindern dessen Bewegung in einer der beiden möglichen Achsrichtungen. Dieses Bauteil ist in besonderer Weise für die Verriegelung einer Kopfstütze eines Fahrzeugsitzes konzipiert, die den Insassen im Falle eines Unfalles eine erhöhte Sicherheit bietet. Da die Kopfstütze durch den auf sie aufprallenden Kopf nicht in die Rückenlehne hineinverschoben werden kann, läßt sich ein Schleudertrauma der Halswirbelsäule vermeiden.

Bevorzugte Ausführungsformen der Erfindung sind durch die übrigen Ansprüche gekennzeichnet.

Nach einer bevorzugten Ausführungsform sind die Klemmkörper als drei Kugeln ausgeführt, die unter im wesentlichen gleichen Umfangswinkeln des Klemmkörperträgers angeordnet sind. Die Anzahl der Klemmkörper wie auch die Wahl der Geometrie stehen in engem Zusammenhang mit den durch Hertzsche Pressung zwischen den Klemmkörpern und dem Klemmelement zu übertragenden Kräften. Die Verwendung von Kugeln stellt hierbei die einfachste und gängigste Möglichkeit dar und die Verwendung von drei Kugeln am Umfang bietet den Vorteil, daß am Klemmelement weitere Verstell- und Arretiereinrichtungen angeordnet werden können, ohne daß die Wirkung des Klemmkörpergesperres beeinträchtigt wird.

Diese Arretiereinrichtungen sollen bei normaler Fahrt die Kopfstützen in der vorgegebenen Position halten.

Vorzugsweise sitzt der Schaltring kugelgelagert auf dem Klemmkörperträger. Diese Lagerung gestattet mit einem Minimum an Reibung zwischen den beiden Elementen ein leichtes Verdrehen zwischen dem Klemmkörperträger sowie dem Schaltring. Hierdurch wird sichergestellt, daß beim Überschreiten eines vorgegebenen Drehmoments, das auf den Schaltring wirkt, dieser sicher bewegt wird und diese Betätigung auch nach längerem betätigungslosen Einbau sichergestellt bleibt.

Vorzugsweise sind der Klemmkörperträger sowie der Schaltring aus Kunststoff oder Sintermetall gefertigt. Hierdurch läßt sich bei hohen Stückzahlen eine sehr kostengünstige Herstellung des Klemmkörpergesperres erreichen.

Nach einer bevorzugten Ausführungsform ist am Schaltring ein Massenkörper befestigt. Dieser bewirkt, daß der Schaltring bei Überschreiten einer vorgegebenen Beschleunigung oder Verzögerung durch dessen Trägheit gegenüber dem Klemmkörperträger verdreht wird und das Klemmkörpergesperre aktiviert wird. Bei der erfindungsgemäßen Verwendung des Klemmkörpergesperres als axial wirkende Arretierung für die Kopfstütze eines Fahrzeugsitzes kann es, sobald eine zu hohe Beschleunigung oder Verzögerung auf den exzentrisch angeordneten, trägen Massenkörper wirkt, unabhängig von einer Zufuhr elektrischer Signale, vollständig mechanisch betätigt werden.

Alternativ kann die Bewegung des Schaltringes auch durch ein elektrisches Signal auslösbar sein. Diese Ausführungsform bietet sich immer dort an, wo die Aktivierung des Klemmkörpergesperres Teil eines gesamten Wirkungskonzeptes ist, im Rahmen dessen auch andere Elemente gesteuert ausgelöst werden sollen. Im konkreten Beispiel der Kopfstütze für einen Fahrzeugsitz kann bspw. das elektrische Signal vom ABS-Sensor oder aber dem Ausklappen eines Überrollbügels ausgelöst werden.

Nach einer bevorzugten Ausgestaltung der Erfindung weist die Lauffläche Betriebsabschnitte sowie Sperrabschnitte auf, wobei die Betriebsabschnitte und Sperrabschnitte gegenüber den Sperrabschnitten erhöht sind und jeweils eine flache Mulde aufweisen. Die flache Mulde, innerhalb derer die Klemmkörper im nicht arretierten Zustand des Klemmkörpergesperres liegen, definiert den mechanischen Auslösewiderstand des Klemmkörpergesperres, da die Klemmkörper gegen die Vorspannkraft der Federn aus der Vertiefung der flachen Mulde über einen angrenzenden, leicht erhöhten Abschnitt angehoben werden muß, bevor er unter einer teilweise Entlastung der Federn in den Sperrabschnitt übergeht.

### Kurze Beschreibung der Zeichnungen

Nachfolgend wird die Erfindung an einem Ausführungsbeispiel anhand der beigefügten Figuren beschrieben, in denen
- Figur 1: eine schematische Ansicht des erfindungsgemäßen Klemmkörpergesperres darstellt,
- Figur 2: eine Schnittansicht der Vorrichtung in Figur 1 zeigt, wobei das Klemmkörpergesperre nicht aktiviert ist;
- Figur 3: den Schaltring mit der Lauffläche und den darauf aufliegenden federbelasteten Klemmkörpern zeigt;
- Figur 4: der Darstellung in Figur 2 entspricht, wobei jedoch das Klemmkörpergesperre aktiviert ist; und
- Figur 5: eine Rückenlehne eines Fahrzeugsitzes mit einer höheneinstellbaren Kopfstütze zeigt.

### Weg der Ausführung der Erfindung

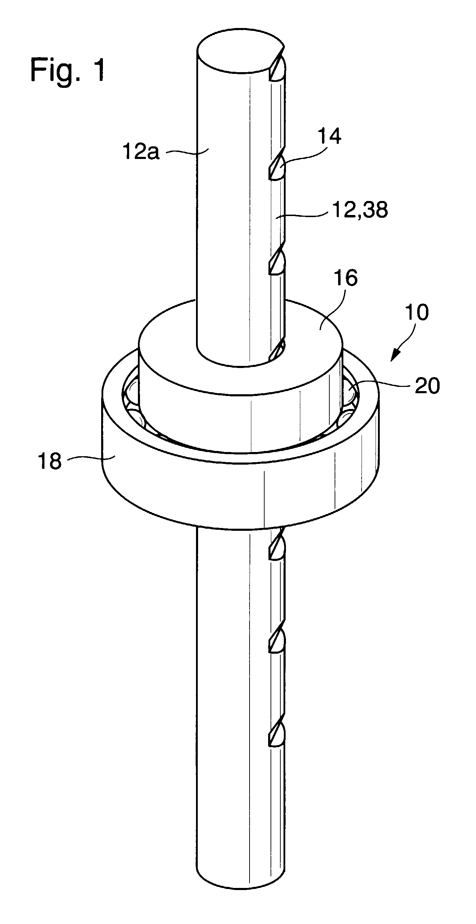

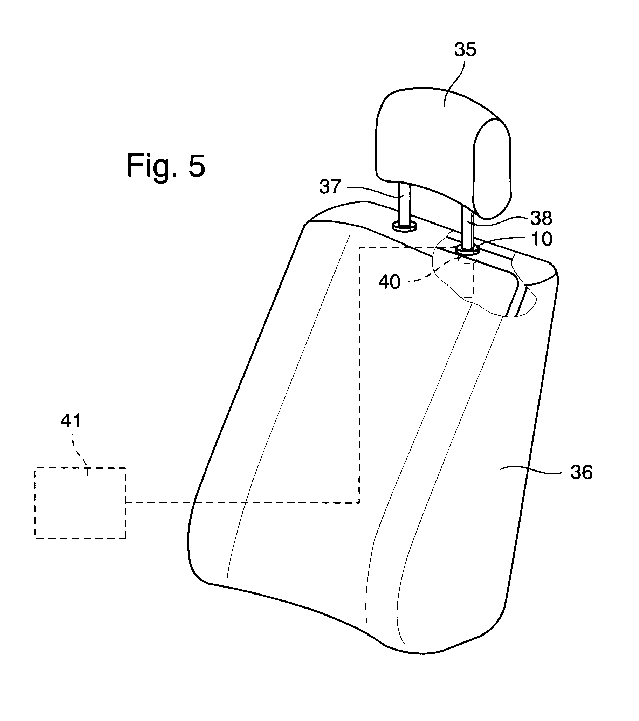

Figur 1 zeigt schematisch das erfindungsgemäße Sperrelement 10 am Beispiel eines Klemmelements 12, wie es gemäß Figur 5 als Tragstange 38 bei der Verankerung von Kopfstützen in Kraftfahrzeugsitzen zur Anwendung gelangt. Das Klemmelement 12 ist aus Metall gefertigt und vorzugsweise als Vollmaterial ausgeführt. In regelmäßigen Abständen sind am Klemmelement 12 Einrastnuten 14 angebracht, die keine Funktion im Zusammenhang mit dem Klemmkörpergesperre besitzen, sondern vielmehr mit einem federvorgespannten Einrastkörper (nicht dargestellt) zusammenwirken, der ohne die Verwendung von Werkzeugen die Höhenverstellung des Klemmelements 12 und das anschließende Einrasten in einer neu justierten Position gestattet.

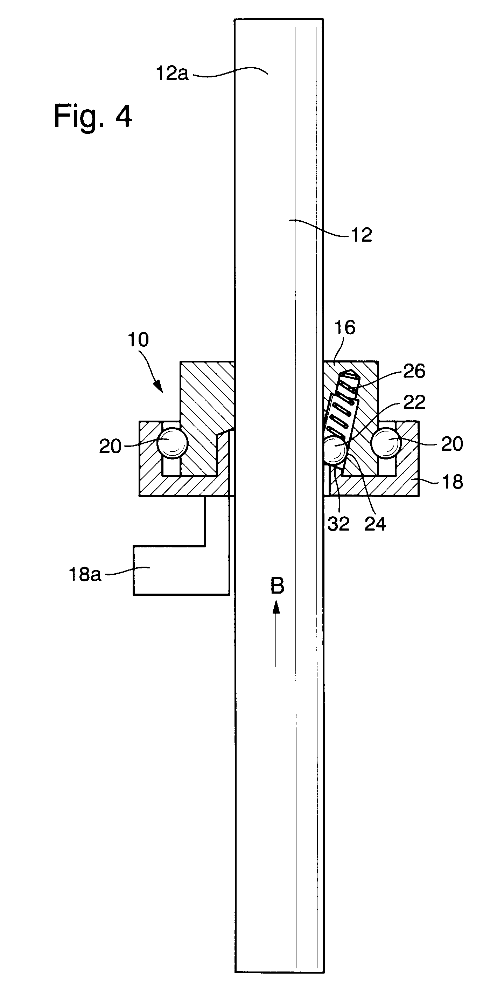

Das Sperrelement 10 besteht im wesentlichen aus einem Klemmkörperträger 16 sowie einem Schaltring 18, der relativ zum Klemmkörperträger 16 verdrehbar ist. Der Klemmkörperträger 16 sowie der Schaltring 18 sind koaxial zueinander angeordnet, und vorzugsweise ist der Schaltring 18 auf dem Klemmkörperträger 16 mittels Kugeln gelagert. Einer der beiden Ringe wird ortsfest gehalten, während der andere Ring relativ zum ersten Ring verdrehbar ausgeführt ist. Die Verdrehung kann auf vielerlei Weise durchgeführt werden, wobei für den hier dargestellten Fall eines uniaxial wirkenden Klemmkörpergesperres zum Blockieren der Einschubbewegung einer Kopfstütze in einem Fahrzeugsitz der Klemmkörperträger 16 ortsfest im Fahrzeugsitz befestigt sein kann und am Schaltring 18 einseitig ein Gewicht 18a (siehe Figur 4) befestigt sein kann, dessen Trägheit beim Auftreten von Beschleunigungs- oder Verzögerungskräften zu einer relativen Drehbewegung des Schaltringes 18 gegenüber dem Klemmkörperträger 16 führt.

Sowohl der Klemmkörperträger 16 als auch der Schaltring 18 können aus Metall oder Kunststoff gefertigt sein, wobei im Falle einer Fertigung aus Kunststoff sich ein Spritzgußverfahren und im Falle einer Metallausführung bspw. ein Sinterwerkstoff besonders eignen. Die Wahl des Werkstoffes für den Klemmkörperträger 16 sowie den Schaltring 18 sind selbstverständlich von den zu übertragenden Klemmkräften aber auch der Stückzahl bei der Fertigung der Bauelemente abhängig.

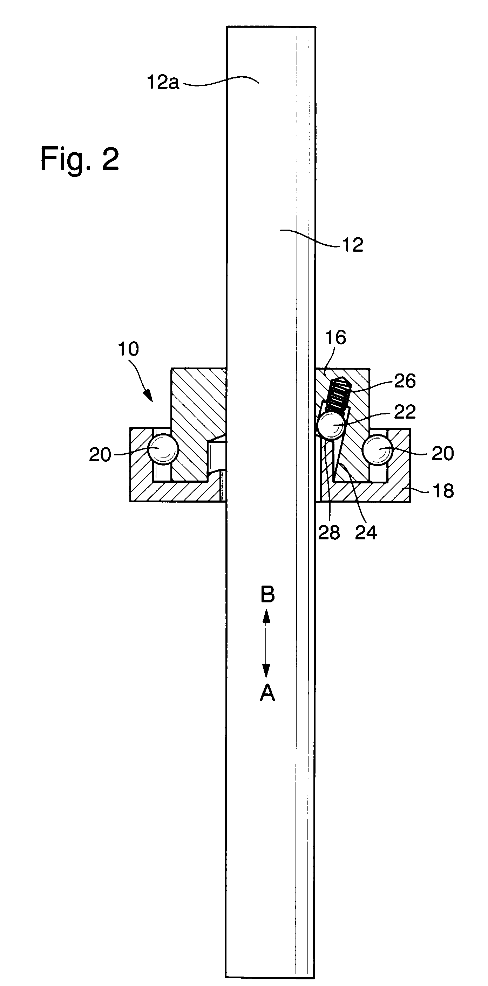

Wie aus Figur 2 ersichtlich ist, in der, wie auch in den nachfolgenden Figuren, jeweils gleiche Bauteile mit denselben Referenzziffern bezeichnet sind, befindet sich zwischen dem Klemmkörperträger 16 und dem Schaltring 18 eine Mehrzahl von Klemmkörpern 22, die vorzugsweise als Kugeln ausgeführt sind. Die im nachfolgenden als Klemmrollen bezeichneten Klemmkörper 22 befinden sich in einem Klemmkörperraum 24, der im Klemmkörperträger 16 gebildet ist. Der Klemmkörperraum 24 ist auf die Geometrie des Klemmkörpers abgestimmt und im Falle von Klemmrollen eine Bohrung, die mit einer geringen Neigung in Radialrichtung im wesentlichen axial im Klemmkörperträger ausgeführt ist. Die geeignetste Neigung bestimmt sich aus dem Reibwert, der dem Tangens des Reibwinkels entspricht. Für Reibwinkel, die üblicherweise im Bereich von 3-4 Grad liegen, ergibt eine Neigung von 6-8 Grad, im Bereich derer die Vorrichtung betriebssicher arbeitet. Neben der Führung der Klemmrolle im Klemmkörperraum 24 werden die Klemmrollen zusätzlich durch eine Druckfeder 26 sowie eine Lauffläche 28 am Schaltring in ihrer Position gehalten. Die Druckfedern 26 sind jeweils im Klemmkörperraum 24 befestigt.

Der Innendurchmesser des Klemmkörperträgers 16 sowie der Außendurchmesser des Klemmelementes 12 sind so aufeinander abgestimmt, daß zwischen den beiden Bauelementen eine Spielpassung besteht und daher, wenn das Sperrelement nicht betätigt ist, das Klemmelement 12 sowohl in Pfeilrichtung A als auch in Pfeilrichtung B axial verschiebbar ist. Die Verbindung zwischen Klemmkörperträger 16 und Schaltring ist in Figur 2 schematisch dargestellt, und es besteht eine Vielzahl von Möglichkeiten neben der dargestellten Kugellagerung, diese beiden Bauteile miteinander zu verbinden und gleichzeitig relativ zueinander verdrehbar zu gestalten.

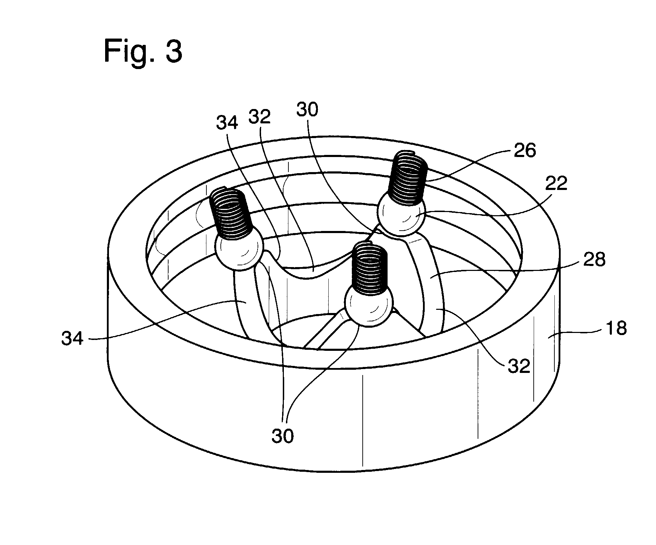

Figur 3 verdeutlicht eine Möglichkeit, den Schaltring 18 auszuführen. Hierbei ist die Lauffläche 28 von besonderem Interesse. Die Lauffläche läßt sich hierbei in Betriebsabschnitte 30 sowie Sperrabschnitte 32 unterteilen. In dem in Figur 3 dargestellten Beispiel befinden sich die drei Klemmrollen 22 jeweils im Betriebsabschnitt 30 der Lauffläche 28 und entsprechen somit der in Figur 2 gezeigten Position, in der das Klemmkörpergesperre nicht aktiviert ist.

Wie aus Figur 3 deutlich ist, sind die Betriebsabschnitte 30 leicht muldenförmig ausgeführt, d. h. beim Drehen des Schaltringes 18 in eine beliebige Rotationsrichtung muß durch die relativen Erhöhungen im Übergangsbereich zwischen Betriebsabschnitten 30 und Sperrabschnitten 32 jeweils ein Widerstand überwunden werden, da die Druckfedern 26 stärker als im Betriebszustand 30 zusammengedrückt werden müssen. Wird dieser Widerstand überwunden, so gelangen nach einer Drehung des Schaltringes 18 relativ zum dazugehörigen Klemmkörperträger 16 die Klemmkörper 22 in den Bereich der Sperrabschnitte, in denen das Sperrelement aktiviert ist. Nach dem Überwinden des anfänglichen Widerstandes wird die relative Drehbewegung zwischen Schaltring 18 und Klemmkörperträger 16 durch die Wirkung der Federn 26 unterstützt, die während der Bewegung der Klemmkörper 22 auf den geneigten Abgleitflächen 34 eine zusätzliche Drehbewegungskomponente erzeugen. Somit läßt sich das Sperrelement nach dem Überwinden eines einstellbaren, anfänglichen Widerstandes durch die Kugellagerung 20 der beiden relativ zueinander bewegbaren Ringe und die Mitwirkung der Druckfeder 26 sehr leicht in den aktivierten, d. h. gesperrten Zustand überführen.

Figur 4 stellt den aktivierten, d. h. gesperrten Zustand der Vorrichtung 10 dar. Die Klemmrolle 22 ist in Richtung auf das Klemmelement 12 verfahren und drückt gegen das Klemmelement 12. Aufgrund der Druckfeder 26 wird die Klemmrolle in dieser Position gehalten und eine Bewegung des Klemmelementes 12 ist nur in Pfeilrichtung B möglich. Eine Bewegung entgegengesetzt zur dargestellten Pfeilrichtung B führt zu einem starken Verklemmen der Klemmrolle 22 zwischen dem Klemmkörperraum 24 und dem Klemmelement 12, wodurch eine Bewegung entgegengesetzt zur Pfeilrichtung B wirkungsvoll unterbunden wird.

Schließlich ist in Figur 5 eine Kopfstütze 35 dargestellt, die gegenüber einer Rückenlehne 36 eines nicht näher dargestellten Fahrzeugsitzes mittels zweier Tragstangen 37 und 38 höhenverstellbar ist. Zu diesem Zweck weist die Rükkenlehne 36 in ihrem Rahmen Aufnahmen 40 auf, innerhalb welcher die Tragstangen 37 und 38 mit samt der daran befestigten Kopfstütze 35 verschiebbar sind. Bestandteil von zumindest einer dieser Aufnahmen 40 ist das zuvor erläuterte Sperrelement 10, das mit der als Klemmelement 12 wirkenden Tragstange 38 zusammenwirkt. Das Sperrelement 10 kann dabei über eine zentrale Steuereinheit 41 eines ABS-Systems oder einer Auslöseeinrichtung eins Airbags betätigt werden.

Wie bereits erwähnt wurde, kann eine Verdrehung des Schaltringes 18 des Sperrelementes 10 entweder durch die Anbringung eines exzentrisch befestigten Gewichts geschehen, dessen Trägheit beim Auftreten hoher Beschleunigungs- oder Verzögerungskräfte zu einem Verdrehen des Schaltringes relativ zum Klemmkörperträger führt. Alternativ kann eine geeignete Verdrehvorrichtung für den Schaltring ebenfalls im Lehnenbereich des Fahrzeugsitzes installiert sein, die bspw. elektrisch betätigbar ist und über ein vom ABS-Sensor kommendes Signal auslösbar ist. Da es sich bei der Verwendung des Sperrelementes zum Blockieren der Einschubbewegung einer Kopfstütze in einem Fahrzeugsitz um eine nur im Notfall zu betätigende Einrichtung handelt, können der Klemmkörperträger sowie der Schaltring aus Kunststoff gefertigt sein. Tritt nach der Auslösung der Einrichtung und einer Axialkraft auf das Klemmelement eine entsprechende Verformung der Bauteile auf, so stellt dies kein Problem dar, da es sich hierbei im Vegleich zu dem überlicherweise sonst auftretenden Schaden am Fahrzeug nur um eine Marginalie handelt und zudem ein solcher Schaden in Verbindung mit einem Kraftfahrzeugunfall nur selten, und hoffentlich überhaupt nicht, auftritt. Durch die in Figur 3 dargestellte Verwendung von drei Klemmrollen läßt sich zudem unabhängig vom dargestellten Klemmkörpergesperre eine axiale Verstellung der Höhe der Kopftstütze durch das Zusammenwirken der Einrastnuten 14 (siehe Figur 1) mit geeigneten Einrastelementen durchführen. Somit läßt sich eine beschleunigungsabhängige Verriegelung der Kopfstütze 35 erreichen und die Sicherheit für die Fahrzeuginsassen erhöhen.

## Patentansprüche

1. Kopfstütze für einen Fahrzeugsitz mit einer an Tragstangen (37, 38) fixierten Kopfauflage (35), wobei zumindest eine der Tragstangen (37, 38) als Klemmelement ausgebildet ist und mit einem Sperrelement (10) zusammenwirkt, welches in einer ortsfest in einer Rückenlehne (36) des Fahrzeugsitzes angeordneten Aufnahme (40) für die Tragstange (37, 38) vorgesehen ist, **dadurch gekennzeichnet**, daß das Sperrelement (10) als in linearer Bewegungsrichtung wirkender Freilauf (22, 16, 26) ausgebildet ist, der federbelastete die Tragstange (37, 38) radial umgebende Klemmkörper (22) aufweist, wobei der Freilauf (22, 16, 26) in einer Sperrstellung einen Einschub der Tragstange (37, 38) in die Aufnahme (40) verhindert und über ein Betätigungselement entriegelbar ist.

2. Kopfstütze für einen Fahrzeugsitz nach Anspruch 1, **dadurch gekennzeichnet**, daß der Freilauf folgende Elemente aufweist:
- einen Klemmkörperträger (16) sowie einen Schaltring (18), der koaxial zum Klemmkörperträger (16) angeordnet und relativ zu diesem verdrehbar ist;
- ein Klemmelement (12), das koaxial mit dem Klemmkörperträger (16) sowie dem Schaltring (18) angeordnet ist und durch diese hindurchtritt;
und
- eine Lauffläche (28) des Schaltringes (18), auf der die federbelasteten Klemmkörper (22) aufliegen und je nach Drehwinkelstellung des Schaltringes (18) relativ zum Klemmkörperträger (16) in klemmendem Kontakt zu dem Klemmelement (12) sind.

3. Kopfstütze für einen Fahrzeugsitz nach Anspruch 2, **dadurch gekennzeichnet**, daß die Klemmkörper (22) als Kugeln ausgeführt sind.

4. Kopfstütze für einen Fahrzeugsitz nach Anspruch 3, **dadurch gekennzeichnet**, daß die Klemmkörper (22) drei Kugeln sind, die unter im wesentlichen gleichen Umfangswinkeln des Klemmkörperträgers (16) angeordnet sind.

5. Kopfstütze für einen Fahrzeugsitz nach Anspruch 2, **dadurch gekennzeichnet**, daß der Schaltring (18) mittels eines Wälzlagers (20) auf dem Klemmkörperträger (16) angeordnet ist.

6. Kopfstütze für einen Fahrzeugsitz nach Anspruch 2, **dadurch gekennzeichnet**, daß der Klemmkörperträger (16) sowie der Schaltring (18) aus Kunststoff oder Sintermetall gefertigt sind.

7. Kopfstütze für einen Fahrzeugsitz nach Anspruch 2, **dadurch gekennzeichnet**, daß am Schaltring (18) ein Massenkörper exzentrisch und starr befestigt ist.

8. Kopfstütze für einen Fahrzeugsitz nach Anspruch 2, **dadurch gekennzeichnet**, daß die Bewegung des Schaltringes durch ein elektrisches Signal auslösbar ist.

9. Kopfstütze für einen Fahrzeugsitz nach Anspruch 8, **dadurch gekennzeichnet**, daß die Verdrehung des Schaltringes (18) relativ zum Klemmkörperring (16) in Richtung Sperrung durch einen ABS-Sensor ausgelöst wird.

10. Kopfstütze für einen Fahrzeugsitz nach Anspruch 2, **dadurch gekennzeichnet**, daß die Lauffläche (28) Betriebsabschnitte (30) und Sperrabschnitte (32) aufweist, wobei
- die Betriebsabschnitte (30) bei Einbau des Klemmkörperträgers (16) über dem Schaltring (18) gegenüber den Sperrabschnitten (32) erhöht sind:
und
- jeweils eine flache Mulde aufweisen.

## Claims

1. Headrest for a vehicle seat, having a head support (35) fixed to support rods (37, 38), at least one of the support rods (37, 38) being constructed as a clamping element and cooperating with a locking element (10) which is provided in a mounting (40) for the support rod (37, 38), fixedly located in a backrest (36) of the vehicle seat, characterised in that the locking element (10) is constructed as a freewheeling mechanism (22, 16, 26) acting in a linear direction of movement, which comprises spring-loaded clamping members (22) radially surrounding the support rod (37, 38), while in one locking position the freewheeling mechanism (22, 16, 26) prevents the support rod (37, 38) from being inserted into the mounting (40) and is releasable by means of an actuating element.

2. Headrest for a vehicle seat according to claim 1, characterised in that the freewheeling mechanism has the following components:
- a clamping member carrier (16) and a switching ring (18) which is disposed coaxially with respect to the clamping member carrier (16) and is rotatable relative thereto;
- a clamping member (12) which is disposed coaxially with respect to the clamping member carrier (16) and to the switching ring (18) and passes through the latter;
and
- a contact surface (28) on the switching ring (18) on which the spring-loaded clamping members (22) abut and are in clamping contact with the clamping member (12) depending on the angle of rotation of the switching ring (18) relative to the clamping member carrier (16).

3. Headrest for a vehicle seat according to claim 2, characterised in that the clamping members (22) are constructed as balls.

4. Headrest for a vehicle seat according to claim 3, characterised in that the clamping members (22) are three balls which are disposed at substantially identical angles around the circumference of the clamping member carrier (16).

5. Headrest for a vehicle seat according to claim 2, characterised in that the switching ring (18) is mounted on the clamping member carrier (16) by means of a roller bearing (20) .

6. Headrest for a vehicle seat according to claim 2, characterised in that the clamping member carrier (16) and the switching ring (18) are made of plastics or sintered metal.

7. Headrest for a vehicle seat according to claim 2, characterised in that a weight is eccentrically and rigidly secured to the switching ring (18).

8. Headrest for a vehicle seat according to claim 2, characterised in that the movement of the switching ring can be triggered by an electrical signal.

9. Headrest for a vehicle seat according to claim 8, characterised in that the rotation of the switching ring (18) relative to the clamping member ring (16) is initiated in the locking direction by an ABS sensor.

10. Headrest for a vehicle seat according to claim 2, characterised in that the contact surface (28) has operating portions (30) and locking portions (32), wherein
- the operating portions (30) are raised relative to the locking portions (32) when the clamping member carrier (16) is installed over the switching ring (18): and
- they each have a flattened depression.

## Revendications

1. Appui-tête pour siège de véhicule, comprenant un coussin d'appui (35) fixé à des tiges porteuses (37, 38) dont une au moins constitue un élément à serrer qui coopère avec un élément de blocage (10) prévu dans un logement (40) recevant la tige (37, 38) et monté à poste fixe dans le dossier (36) du siège de véhicule,
caractérisé en ce que
l'élément de blocage (10) est un dispositif à course libre (22, 16, 26) agissant selon une direction rectiligne de mouvement, qui comprend des corps de serrage (22) sous contrainte élastique, entourant radialement la tige porteuse (37, 38), le dispositif (22, 16, 26) empêchant un coulissement de la tige (37, 38) dans un logement (40), lorsqu'il est en position de blocage dont il peut être dégagé par un élément d'actionnement.

2. Appui-tête pour siège de véhicule selon la revendication 1,
caractérisé en ce que
le dispositif à course libre comprend les éléments suivants :
- un support de corps de serrage (16) ainsi qu'une bague de commutation (18) qui lui est coaxiale et peut tourner par rapport à lui,
- un élément à serrer (12), coaxial au support (16) ainsi qu'à la bague (18) et les traversant,
- sur la bague de commutation (18) une portée de circulation (28) sur laquelle sont appliqués les corps de serrage (22) sous contrainte élastique, qui, selon la position angulaire relative de la bague (18) et du support (16) sont en contact de blocage avec l'élément à serrer.

3. Appui-tête pour siège de véhicule selon la revendication 2,
caractérisé en ce que
les corps de serrage (22) sont des billes.

4. Appui-tête pour siège de véhicule selon la revendication 3,
caractérisé en ce que
les corps de serrage (22) sont trois billes, montées selon des angles essentiellement égaux à la périphérie du support (16).

5. Appui-tête pour siège de véhicule selon la revendication 2,
caractérisé en ce que
la bague de commutation (18) est montée sur le support de corps de serrage (16) par un palier à rouleaux (20).

6. Appui-tête pour siège de véhicule selon la revendication 2,
caractérisé en ce que
le support des corps de serrage (16) ainsi que la bague de commutation (18) sont en plastique ou en métal fritté.

7. Appui-tête pour siège de véhicule selon la revendication 2,
caractérisé en ce que
sur la bague de commutation (18) est fixé rigidement, de manière excentrée, un corps faisant masse.

8. Appui-tête pour siège de véhicule selon la revendication 2,
caractérisé en ce que
le mouvement de la bague de commutation est déclenché par un signal électrique.
9°) Appui-tête pour siège de véhicule selon la revendication 8,
caractérisé en ce que
la rotation de la bague (18) par rapport au support (16) dans le sens du blocage, est déclenchée par un détecteur ABS.
10°) Appui-tête pour siège de véhicule selon la revendication 2,
caractérisé en ce que
la portée de circulation (28) présente des sections de service (30) et des sections de blocage (32), avec des sections de service (30) qui
- sont surélevées par rapport aux sections de blocage (32) au montage du support (16) sur la bague (18), et
- ont chacune un creux plat.
